Europäisches Patentamt

European Patent Office

Office européen des brevets

(19)

(11) **EP 1 401 198 A2**

(12) **EUROPEAN PATENT APPLICATION**

(43) Date of publication:
**24.03.2004 Bulletin 2004/13**

(51) Int Cl.⁷: **H04N 5/445**

(21) Application number: **03255867.8**

(22) Date of filing: **18.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **18.09.2002 KR 2002056946**

(71) Applicant: **Electronics and Telecommunications
Research Institute
Daejeon 305-350 (KR)**

(72) Inventors:
 • **Lee, Hee Kyung
  Daejon, 305-805 (KR)**
 • **Kang, Kyeongok
  Daejon 305-727 (KR)**
 • **Han, Kyu Lee
  Daejon 302-781 (KR)**
 • **Jin, Woong Kim
  Daejon 305-761 (KR)**

(74) Representative: **Powell, Timothy John
Eric Potter Clarkson,
Park View House,
58 The Ropewalk
Nottingham NG1 5DD (GB)**

(54) **Personal channel service providing method and apparatus for providing preferred program at user preferred time**

(57)     Provided is a personal channel service method and apparatus for providing a program preferred by a user in a preferred time duration by extracting the preferred time duration and the preferred program based on usage history of a personal digital recorder (PDR). The personal channel service providing method includes the steps of: a) receiving content description data and instance description data of a program to be broadcasted through a TV network; b) determining the preferred duration and the preferred program in the preferred duration based on usage history of the PDR, and updating the instance description data to include the preferred duration and the preferred program; c) generating an electronic program guide (EPG) for informing the user that the preferred program is outputted on the personal channel in the preferred duration based on the updated instance description data; and d) outputting the EPG to the PDR.

FIG. 1

EP 1 401 198 A2

**Description**

Field of the Invention

The present invention relates to a personal channel service providing method and apparatus for providing a program preferred by a user in a preferred time duration.

Description of Related Art

Recent development of digital television (TV) technologies makes it easy to store TV programs. This makes a user watch a program he prefers, which is referred to as a preferred program, at a time duration also preferred by the user, which is referred to as a preferred duration, regardless of broadcasting schedule.
Many researchers are studying worldwide to extract preference propensity of viewers. Global broadcasting stations and corporations even launched a group called TV-Anytime Forum to establish international standards and thus makes it possible to watch a program desired by viewers anytime anywhere.
Generally, preferred duration and preferred programs for watching TV are different according to viewer's personal characteristics such as ages, gender and occupations. For example, preschool children under the age of 7 prefer time from 8 a.m. to 10 a.m. when most of children-oriented programs are broadcasted. Grown-ups with jobs prefer time of from 9 p.m. to 11 p.m. after they come back from work. They show low preference of weekday daytime, while they have high preference of weekend or holiday daytime. This preference propensity is repeated every week along with seven-day program organization.
Therefore, called for is a personal channel service for providing viewers with programs they prefer to watch at a preferred time that can give them an option for selecting programs that fit in with the preference propensity of the viewers.

Summary of the Invention

It is, therefore, an object of the present invention to provide a system and method for providing a program preferred by a user, which is referred to as a preferred program, in a preferred time duration preferred by the user, which is referred to as a preferred duration, through a personal channel by extracting the preferred duration and the preferred program automatically based on usage history of the user using a personal digital recorder (PDR).
Other objects and advantages of the present invention will be described hereinafter with reference to embodiments. The objects and advantages of the present invention can be embodied by components described in claims and combinations thereof.
In accordance with an aspect of the present invention, there is provided a personal channel service providing method for outputting a preferred television (TV) program through a personal channel of a PDR in a preferred duration, the method including the steps of: a) receiving content description data and instance description data of a program to be broadcasted through a TV network; b) determining the preferred duration and the preferred program in the preferred duration based on usage history of the PDR, and updating the instance description data to include the preferred duration and the preferred program; c) generating an electronic program guide (EPG) for informing the user that the preferred program is outputted on the personal channel in the preferred duration based on the updated instance description data; and d) outputting the EPG to the PDR.
In accordance with another aspect of the present invention, there is provided a personal channel service providing apparatus for outputting a preferred TV program through a personal channel in a preferred duration, the apparatus including: a memory portion for storing a control program; a database for storing instance description data, content description data, and user preference data based on usage history of the personal channel service providing apparatus; a display portion for outputting an EPG; and a processing portion for updating the instance description data based on the user preference data and generating an EPG which informs the user that the preferred program is outputted through the personal channel in the preferred duration based on the updated instance description data, the processing portion being connected to the memory portion, the database, and the display portion.

Brief Description of the Drawings

The above and other objects and features of the present invention will become apparent from the following description of the preferred embodiments given in conjunction with the accompanying drawings, in which:

Fig. 1 is a diagram describing a method for providing personal channel service in accordance with the present invention;

Fig. 2 is a block diagram illustrating an entire system for providing personal channel service in accordance with the present invention;

Fig. 3 is an exemplary view showing content description metadata written in an extensible Markup Language (XML) code;

Fig. 4 is an exemplary view showing instance description metadata written in the XML code;

Fig. 5 is an exemplary view showing user preference metadata written in the XML code;

Fig. 6 is an exemplary view showing personalized instance metadata written in the XML code;

Fig. 7 is an exemplary view showing usage history information written in the XML code;

Fig. 8 is an exemplary view showing a search result of location resolution data written in the XML code;

Fig. 9 is an exemplary view showing data fields of usage history information stored in a user profile unit;

Fig. 10 is a diagram illustrating a structure of fields of date preference table;

Fig. 11 is a diagram illustrating a structure of fields of a filtering and search preference table;

Fig. 12A is an exemplary view showing an image of program information outputted from a user interface unit;

Fig. 12B is an exemplary view showing an image of program group information outputted from the user interface unit;

Fig. 13 is a table describing a meaning of group type;

Fig. 14 is a table illustrating relationship between genre and group type;

Figs. 15 and 16 are flowcharts showing a process for determining whether a program stored in a personal digital recorder (PDR) is preferred or a program broadcasted in real-time is preferred in a preferred duration;

Fig. 17 is a flowchart illustrating a process for determining a preferred program, when a user has a strong propensity to watch a program stored in a PDR in a preferred duration;

Fig. 18 is a flowchart illustrating a process for determining a preferred program, when a user has a strong propensity to watch a program broadcasted in real-time in a preferred duration;

Fig. 19 is a table defining a "Watched" field added to a program location table;

Fig. 20 is a table defining a "Day" field added to the program location table;

Fig. 21 is a table defining a "Store" field added to the program location table;

Fig. 22 is a table showing a structure of fields of a service information table to which personal channel information is added; and

Fig. 23 is a table illustrating a structure of fields of the program location table to which personal channel information is added.

Detailed Description of the Invention

Other objects and aspects of the invention will become apparent from the following description of the embodiments with reference to the accompanying drawings, which is set forth hereinafter.

Following description exemplifies only the principles of the present invention. Even if they are not described or illustrated clearly in the present specification, one of ordinary skill in the art can embody the principles of the present invention and invent various apparatuses within the concept and scope of the present invention.

The use of the conditional terms and embodiments presented in the present specification are intended only to make the concept of the present invention understood, and they are not limited to the embodiments and conditions mentioned in the specification.

In addition, all the detailed description on the principles, viewpoints and embodiments and particular embodiments of the present invention should be understood to include structural and functional equivalents to them. The equivalents include not only currently known equivalents but also those to be developed in future, that is, all devices invented to perform the same function, regardless of their structures.

For example, block diagrams of the present invention should be understood to show a conceptual viewpoint of an exemplary circuit that embodies the principles of the present invention. Similarly, all the flowcharts, state conversion diagrams, pseudo codes and the like can be expressed substantially in a computer-readable media, and whether or not a computer or a processor is described distinctively, they should be understood to express various processes operated by a computer or a processor.

Functions of various devices illustrated in the drawings including a functional block expressed as a processor or a similar concept can be provided not only by using hardware dedicated to the functions, but also by using hardware capable of running proper software for the functions. When a function is provided by a processor, the function may be provided by a single dedicated processor, single shared processor, or a plurality of individual processors, part of which can be shared.

The apparent use of a term, 'processor', 'control' or similar concept, should not be understood to exclusively refer to a piece of hardware capable of running software, but should be understood to include a digital signal processor (DSP), hardware, ROM, RAM and non-volatile memory for storing software, implicatively. Other known and commonly used hardware may be included therein, too.

Similarly, a switch described in the drawings may be presented conceptually only. The function of the switch should be understood to be performed manually or by controlling a program through a program logic, a dedicated logic, or by interaction of the dedicated logic. A particular technology can be selected for deeper understanding of the present specification by a system designer.

In the claims of the present specification, an element expressed as a means for performing a function described in the detailed description is intended to include all methods for performing the function including all formats of software, such as combinations of circuits for performing the intended function, firmware/microcode and the like. To perform the intended function, the element is cooperated with a proper circuit for performing the software. The present invention defined by claims includes diverse means for performing particular functions, and the means are connected with each other in a method requested in the claims. Therefore, any means that can provide the function should be understood to be an equivalent to what is figured out from the present specification.

Other objects and aspects of the invention will become apparent from the following description of the embodiments with reference to the accompanying drawings, which is set forth hereinafter. The same reference numeral is given to the same element, although the element appears in different drawings. In addition, if further detailed description on the related prior arts is determined to blur the point of the present invention, the description is omitted. Hereafter, preferred embodiments of the present invention will be described in detail.

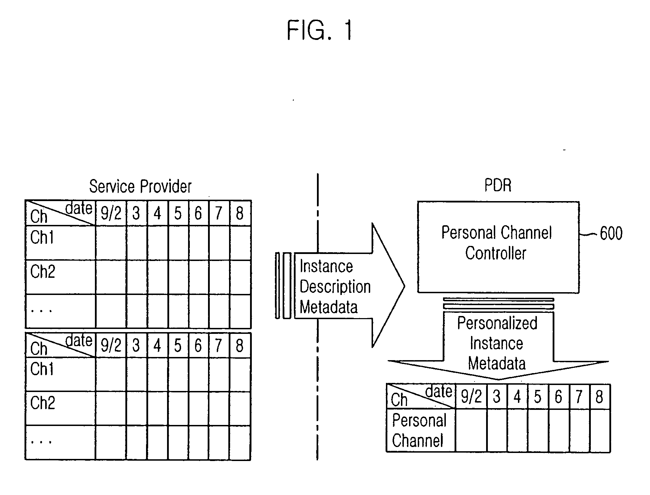

Fig. 1 is a diagram describing a method for providing personal channel service in accordance with the present invention. Referring to Fig. 1, a personal channel controlling unit of a personal digital recorder (PDR) generates personalized instance metadata, which includes updated instance description metadata, by referring to instance description metadata and user preference metadata, and makes a program preferred by a user be broadcasted on a personal channel of the PDR in a preferred time duration based on the personalized instance metadata. Here, the instance description metadata is program schedule information published by a service provider, and the user preference metadata is generated in the PDR.

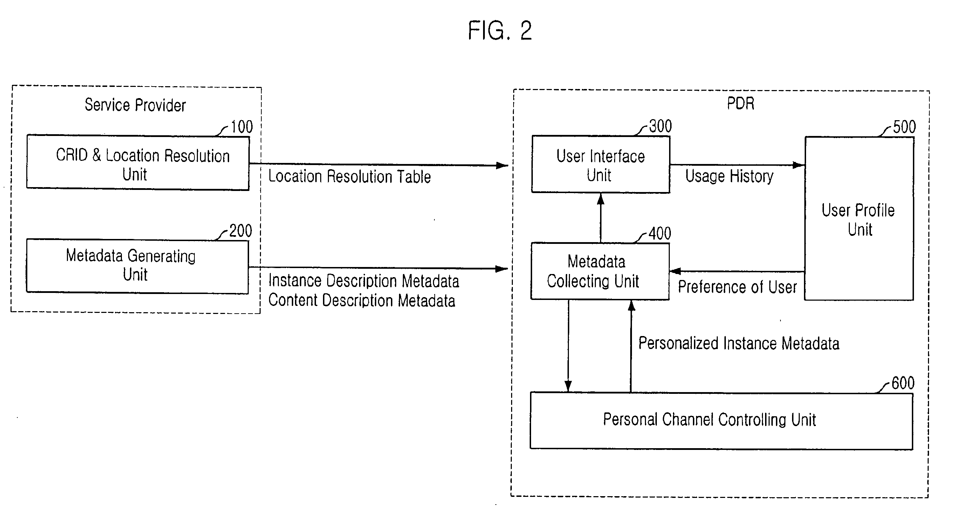

Fig. 2 is a block diagram illustrating an entire system for providing personal channel service in accordance with the present invention. Referring to Fig. 2, a content reference identification (CRID) and location resolution unit 100 of the service provider provides the PDR with a CRID for identifying a broadcasting program and a location resolution table for indicating a physical address of the content.

The metadata generating unit 200 of the service provider provides content description metadata, which includes program group information, and instance description metadata to the PDR.

Then, a user interface unit 300 of the PDR provides an electronic program guide (EPG) to a user by using the instance description metadata and the content description metadata, which are collected by a metadata collecting unit 400. The user can search or watch a desired program with the EPG.

The PDR usage history of the user is stored in a user profile unit 500, and used to extract user preference information, such as date (day and time) preferred by the user and preferred programs.

The personal channel controlling unit 600 determines programs to be broadcasted in a preferred duration on a personal channel.

The personal channel controlling unit 600 updates instance description metadata to notify the user that a new program instance is included in a personal channel.

The user interface unit makes the PDR user watch a preferred program in a preferred duration by generating a new EPG based on the updated personalized instance description metadata and recommending programs to be broadcasted on the personal channel.

Hereafter, a process for providing personal channel service is described step by step in accordance with the present invention.

<Publication>

The CRID and location resolution unit 100 publishes a CRID for identifying a broadcasting program and a location resolution table to a PDR.

Also, the metadata generating unit 200 publishes content description metadata and instance description metadata to the PDR. The location resolution table and the two metadata are stored in the metadata collecting unit 400 of the PDR.

The PDR determines programs to be broadcasted on a personal channel based on content description metadata and instance description metadata, and user preference metadata. So, the service provider should provide the content description metadata and the instance description metadata, and the PDR should generate the user preference metadata based on the PDR usage history of the user. The content description metadata contains general information on contents. It is not changed by a change of publication or broadcasting method of the contents.

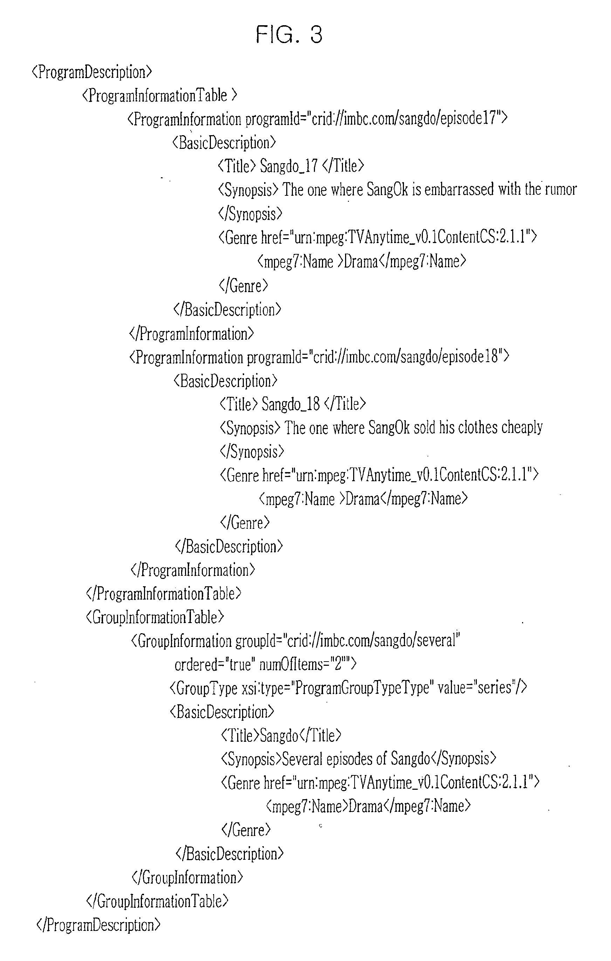

Fig. 3 is an exemplary view showing content description metadata written in an eXtensible Markup Language (XML) code. The content description metadata includes a group information table of a Korean drama "Sangdo: Life of Ginseng Merchant" (which is referred to as "Sangdo", herein) which comprises a predetermined number of episodes, and program information tables which contain information on each episode.

The PDR informs the user of a brief broadcasting schedule by generating EPG based on the instance description metadata. A broadcast event table of the instance description metadata is used for the above purposes.

The instance description metadata is referred to in a process of selecting programs for a personal channel based on user preference metadata, and used in a process of providing the user with information on newly included channels and programs. This will be described more in detail in a subsequent selection process.

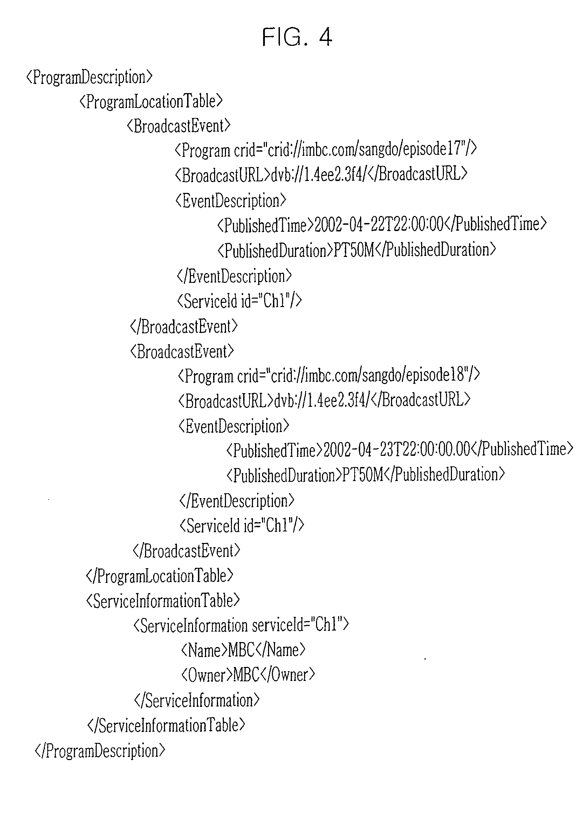

Fig. 4 is an exemplary view showing instance description metadata written in the XML code. Referring to Fig. 4, the instance description metadata includes a program location table which includes broadcasting event information and a service information table which includes individual channel information, e.g., service identification number, title of service, and owner.

User preference metadata is used to determine a program to be broadcasted on a personal channel and a broadcasting date of the program. The user preference metadata includes preference for program titles, preference for view date (day and time), and preference for genre at each view time.

Differently from the two metadata, the user preference metadata is generated in the PDR. That is, the usage history information of the user which contains information on PDR operation by the user through the user interface unit 300 is stored in a user profile unit 500. Based on the usage history information of the user, the user preference metadata is generated and stored in a metadata collecting unit 400.

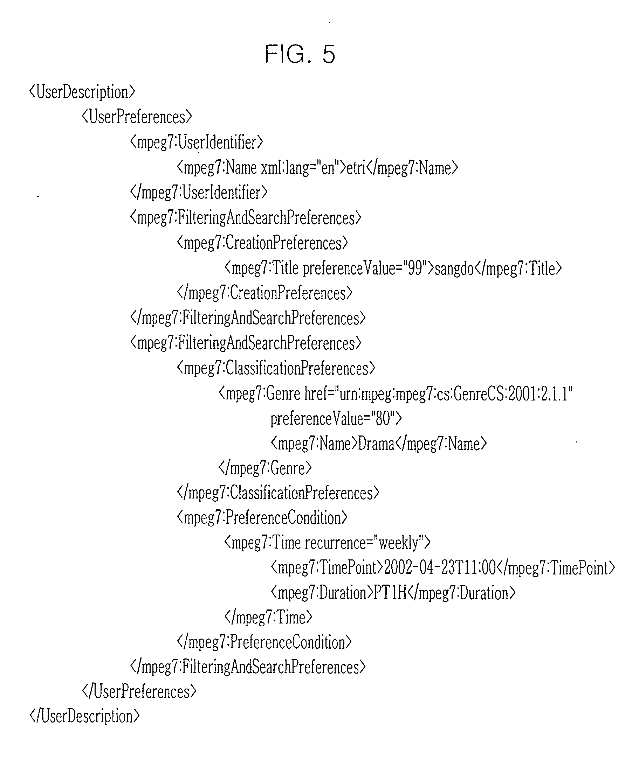

Fig. 5 is an exemplary view showing user preference metadata written in the XML code. Referring to 5, the user preference metadata includes a filtering and search preference table that shows preference of the user for the exemplified broadcasting program "Sangdo".

<Search and Selection of PDR>

When the above three metadata, i.e., content description metadata, instance description metadata and user preference metadata, are acquired, a personal channel controlling unit 600 of the PDR generates a personal channel separately, other than a conventional broadcasting channel, a cable channel and a satellite channel. Also, the personal channel controlling unit 600 receives the user preference metadata, the content description metadata and the instance description metadata from the metadata collecting unit 400, and selects a program to be broadcasted on the personal channel at time preferred by the user. Desirably, the personal channel controlling unit 600 selects a program to be broadcasted in the preferred duration before the preferred duration comes.

The channel controlling unit 600 performs following steps to select the program.

In the first place, it identifies view date (day and time) preferred by the user.

Secondly, it identifies a genre preferred by the user at the above preferred date.

Thirdly, it selects a program that belongs to the preferred genre and has high title preference for the personal channel.

Fourthly, it updates the instance description metadata to inform the user of newly included channels and program description.

Fifthly, it stores an updated personalized instance metadata in the metadata collecting unit 400.

At the same time, the PDR generates a locator to be assigned to the newly scheduled program and adds it to a location resolution data.

This way, when the user selects a program to watch, it can obtain the locator of the selected program by searching the location resolution data with a content reference identification (CRID) of the program. This is content reference method that uses the CRID and location resolution data provided by TV-Anytime Forum to determine a locator of a particular content object.

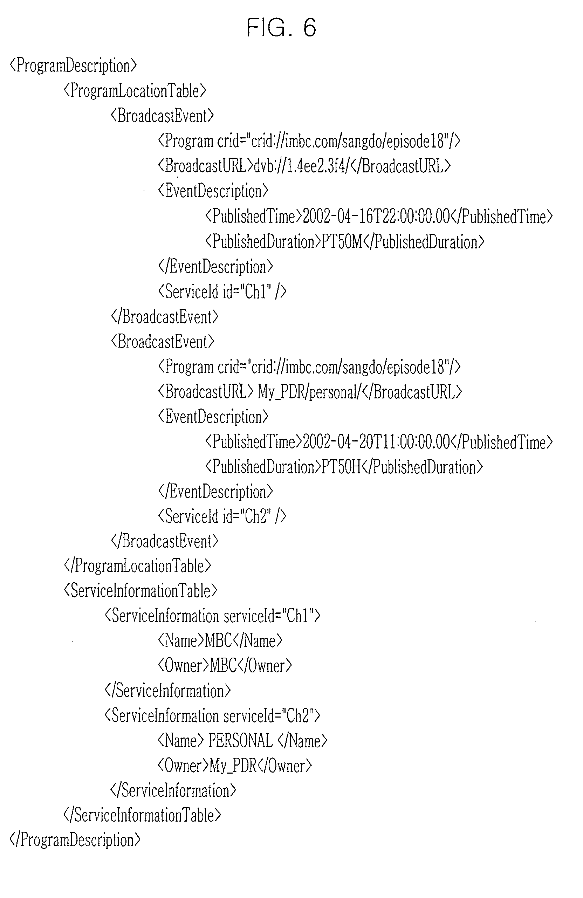

Fig. 6 is an exemplary view showing personalized instance metadata written in the XML code. Referring to Fig. 6, the example program "Sangdo" is selected to be broadcasted on the personal channel, and service description information of the "personal" channel is added to the service description information of a "Munhwa broadcasting corporation (MBC)" channel that is on service from the first.

<Search by the User>

After the search and selection processes of the PDR, the user interface unit 300 of the PDR provides the user with EPG by using program information from the metadata collecting unit 400 and the newly generated program location information. The EPG includes information on the personal channel as well as other channels.

The user examines program information and group information of a particular program by using the EPG provided by the user interface unit 300. This examination means that the user is interested in the program, and this affects the preference of the user favorably. In short, every minute actions of the user through the EPG is included in the usage history information of the user and stored in the user profile unit 500.

The user profile unit 500 uses the usage history information to generate the user preference metadata including preferred title of program, preference value of preferred date, and preferred genre on each date.

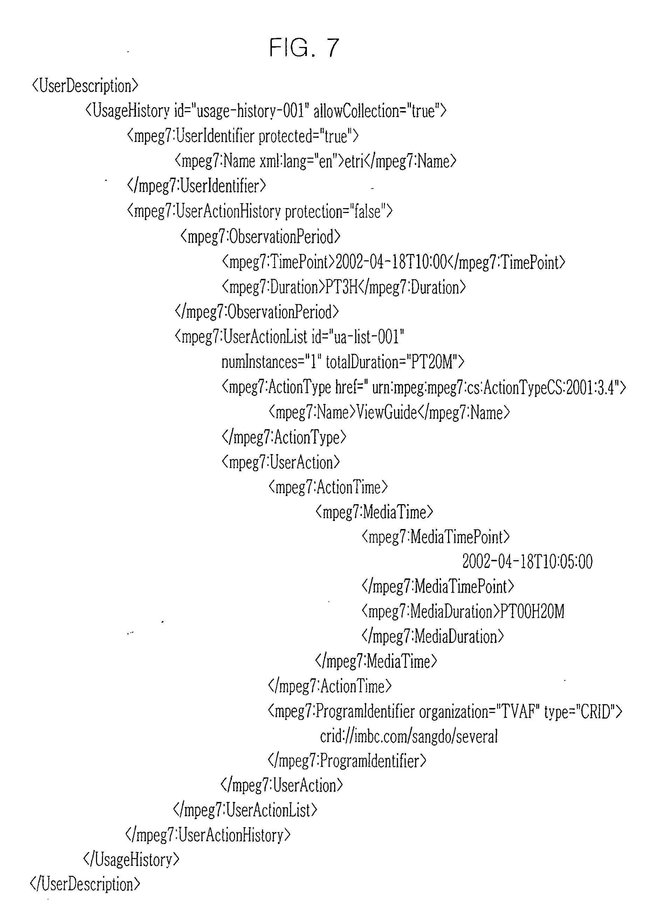

Fig. 7 is an exemplary view showing usage history of the user written in the XML code. Referring to Fig. 7, the usage history information includes the user action whose type name is "view guide" with respect to the example program "Sangdo".

<Selection of User>

When the user finds out a program he wants to watch on the personal channel, he selects the program on the EPG of the user interface unit 300. In an embodiment of the present invention, it is assumed that the user selects the 18th episode of the drama program "Sangdo" provided on the personal channel (CRID "crid://imbc.com/sangdo/episode18").

<Location>

When a program is selected by the user, the PDR searches a location resolution table and identifies a locator of the program by using the CRID.

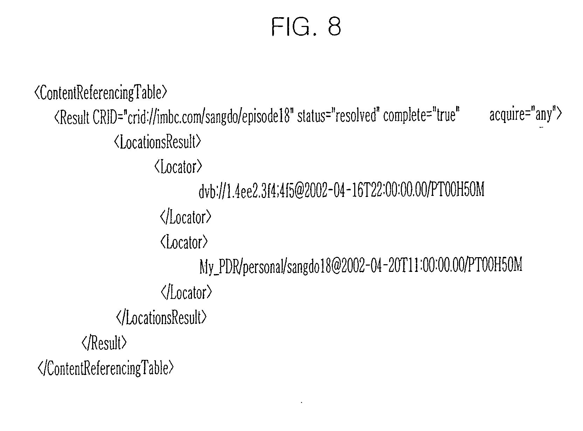

Fig. 8 is an exemplary view showing a search result of location resolution data written in the XML code. Referring to Fig. 8, two locations indicating general Digital Video Broadcasting (DVB) and personal channel for the example program "Sangdo" are searched from the use of CRID of the program.

<Acquisition>

When the location is identified by using the CRID, the PDR uses the second location (*My_PDR/personal/sangdo18@2002-04-20T11:00:00.00/PT00H50M*) out of the search result of Fig. 8. Therefore, the PDR displays the program selected in the preferred duration from the location.

<Viewing>

The user watches the program he prefers, which is the 18th episode of "Sangdo" in the above example, in the preferred duration, which is 11 o'clock, April 20, 2002.

<Finish>

The user action of watching a particular program is stored in the user profile unit 500 as usage history information. The usage history information is used to determine a program to be broadcasted on the personal channel in another time duration, such as the same time next week.

Taking the broadcasting program "Sangdo" as an example, described in the above is the operation process of the personal channel service providing system of the present invention, which includes publication, search, selection, location, viewing and finish.

The personal channel service is necessary to allow users watch a preferred program at a convenient time. This is because users have different preferences for programs and watching time according to their circumstances, and the personal channel service can provide the users with the preferred programs in the preferred duration based on the users' preferences.

Hereafter, processes for extracting user preference and determining preferred program are described to provide the personal channel service in accordance with the present invention.

<Automatic Extraction of User Preference>

To provide the personal channel service, it needs to know user's preference for a particular day and time, preferred genre in the preferred duration, and preferred program title. In the personal channel service system of the present invention, the preference information of the user is computed based on the usage history of the user. View time preferred by the user and program titles preferred at each time are determined and provided on the personal channel. Hereafter, a method for extracting user preference for a particular day and time and preference for genre and program titles is described.

<Day and Time Preference>

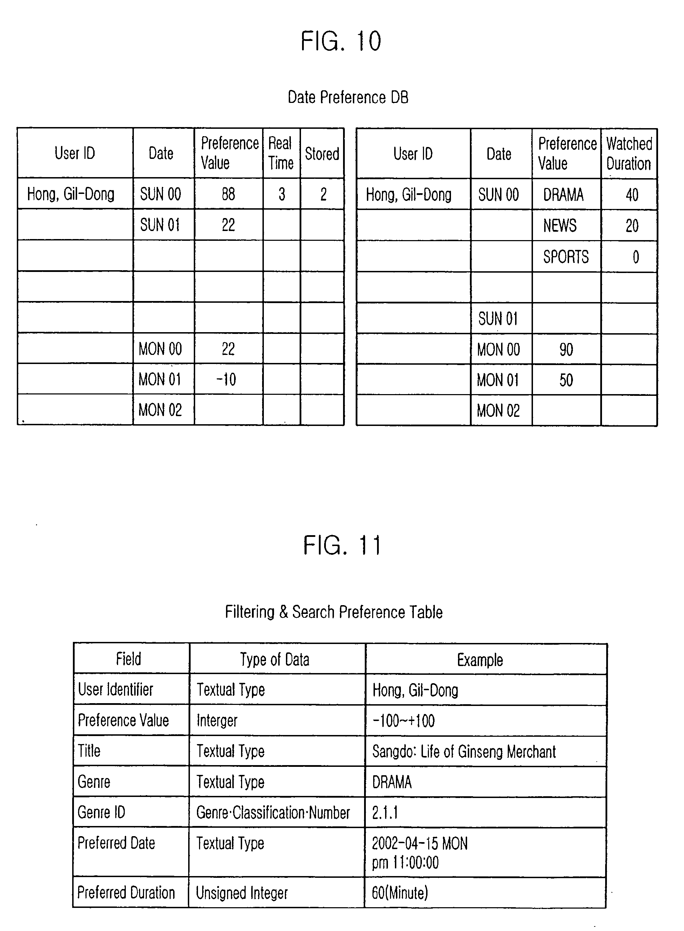

Preference for day and time for watching a program and preference for genre at each time are extracted as follows. The preference for day and time is computed by filling in the fields of a date preference database of Fig. 10 based on the usage history information stored in the user profile unit 500.

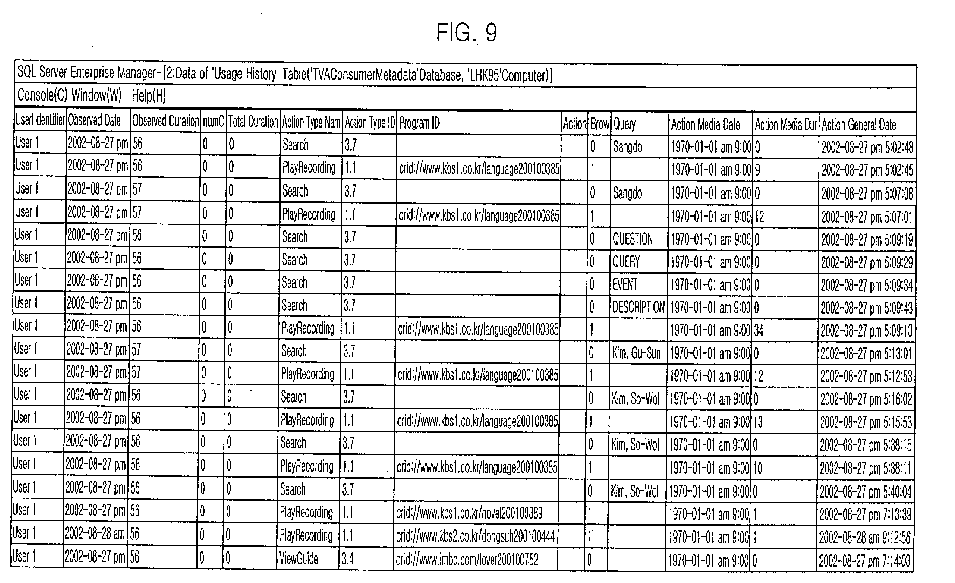

Fig. 9 is an exemplary view showing data fields of usage history information stored in a user profile unit. Referring to Fig. 9, there is an action item that has an action type name field of "play recording" and an action type ID of "1.1" among fields of the usage history information. With respect to the item, information on the day and time the action occurred is extracted from an action general date field. Information on a period during which the action is continued is extracted from an action general duration field. CRID information of the watched program is extracted from a program ID field.

When the user logs out, fields of a table on the right part in Fig. 10 is filled in. Genre information is obtained from program ID information by referring to the program information table.

If the table on the right part of Fig. 10 is completed by using the three information, user preference for date (day and time) can be computed based on the following Equation 1:

$$NPVofDate(i) = \frac{EDTDur(i)*100}{MaximumValueofDTDur} \qquad \text{Eq. 1}$$

wherein $EDTDur(i)$ is summation of view time of all genre in each duration; and $MaximumValueofDTDur$ is the largest value of each duration. If it is assumed that preference is updated on a week basis, the $MaximumValueofDTDur$ can be 60 minutes at the largest.

The preference for the date (day and time) computed as shown above is $NPVofDate(i)$, and it is accumulated to the preference value of previous date. If $EDTDur(i)$ is 0 (i.e., if the user did not watched TV in the duration), the preference value is reduced by 1 from the preference value of the previous date.

For example, if the user watched a drama for 40 minutes and news for 20 minutes at 0 o'clock on Sunday (which is expressed as "SUN00" in Fig. 10), $EDTDur(i)$ is 60 minutes (which is summation of 40 min + 20 min).

If $MaximumValueofDTDur$ is 60 minutes, $NPVofDate(i)$ becomes 100, and the value of $NPVofDate(i)$ is accumulated to the previous preference value. Thus, the preference of SUN00 is increased. In this case, the preferred genre of SUN00 is the drama which occupies the larger view time (i.e., 40 minutes) than the news.

A preference value for day and time is computed as described in the above and filled in a table on the left part in Fig. 10.

After the preference for date is computed, preferred date (day and time preferred for watching), preferred duration, and genre ID are stored in a filtering and search preference table of Fig. 11. The other fields of the filtering and search preference table remain null to discriminate them from title preference.

< Program Title Preference >

It needs preference information for a program title to determine programs to be broadcasted on the personal channel based on the preferred genre information of each preferred duration, which is obtained from the preferred date (day and time) extracting process.

Hereafter, a method for computing user preference for a program tile is described. The user preference for a program title is computed based on the usage history information stored in the user profile unit 500.

First, program information or program group information of a program in which the user is interested can be selected to be viewed from a program title list provided by EPG.

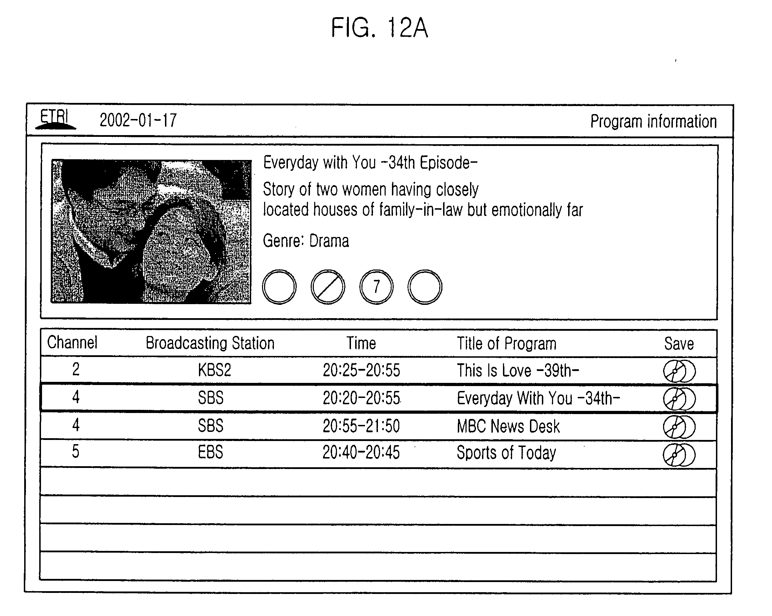

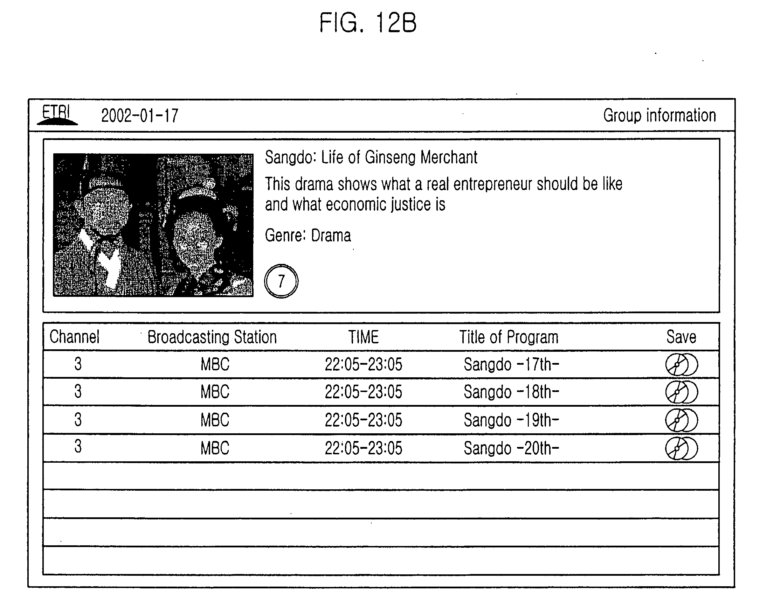

Figs. 12A and 12B are exemplary views showing images of program information or program group information outputted from the user interface unit 300. They provide information, such as title, storyline, and main image of a program or a group the program belongs to.

The exposed program information is recorded in the usage history and increases the preference for the program. In other words, when the user sees information on a program, the watching action of the information is recorded in the usage history information and affects the computation of program title preference.

Among the fields of the usage history information in Fig. 9, for example, with respect to an action item of which an action type name is "view guide" and an action type ID is "3.4", the CRID information of the program is extracted from the program ID field.

When the frequency of searching information for a particular program is $EPIFreq(i)$, program preference can be computed based on Equation 2:

$$CPI(i) = \frac{EPIFreq(i)*100}{Maximum\ ValueofPIFreq} \qquad \text{Eq. 2}$$

wherein *MaximumValueofPIFreq* is the searching frequency number of a program which is searched most frequently.

The *CPI(i)* is used to compute preference for a program title. Likewise, when the user selects a program on a program list (a subordinate list of Fig. 12A or Fig. 12B) provided by the EPG and watches the program, the action of the user is recorded in the usage history information. The usage history increases the user's preference for the program title.

For example, among the fields of the usage history information in Fig. 9, with respect to an action item of which the action type name is "play recording" and the action type ID is "1.1", information on a period an action is continued is extracted from an action general duration field, and the CRID information of the watched program is extracted from the program ID field.

When the summation of view times of the programs is *EPROGDur*, preference for a particular program can be computed based on Equation 3:

$$CP(i) = \frac{EPROGDur(i)*100}{MaximumValueof\ Pro gram} \qquad \text{Eq. 3}$$

wherein *MaximumValueof Program* is the summation of view times of a program of which the summation of view times is longest.

The *CP(i)* is used to compute preference for a program title. That is, program preference is computed based on Equation 4:

$$CT(i) = CP(i) + 0.5 \times CPI(i) \qquad \text{Eq. 4}$$

Upon the computation of the preference for a program title as described above, 10 program titles with highest preference and the preferences are stored in a filtering and search preference table of Fig. 11. Here, it is possible to add a process for comparing the program title preference computed based on Equation 4 with the program title preference before update, and/or a process for re-adjusting the program title preference based on the comparison result.

<Personal Service Generation>

Described, herein, is a method for determining a program to be provided on the personal channel in each preferred duration in the personal channel controlling unit 600 based on the preferred date (e.g., day and time) and program title preference, and providing the user with broadcasting schedule information of the personal channel.

<Preferred Program Per Preferred Date>

It is hard to determine which program to be provided on the personal channel in a preferred duration. It should be determined which program the user would most prefer among the programs belonging to a preferred genre in the preferred duration.

In the filtering and search preference table of Fig. 11, 10 program titles preferred by the user and the preference value of them are stored, and the genre of each program can be known by referring to a genre field of the program information table. Therefore, among the 10 programs preferred by the user, the programs that belong to the preferred genre in the preferred duration are filtered and arranged in the order of preference values from large to small.

In accordance with the personal channel service of the present invention, a most recent program which belongs to a group of programs with a large preference value but is not watched by the user yet can be allocated to the preferred duration. In order to provide the personal channel service, program grouping should be performed and then a preferred program determining process should be performed, which will be described hereinafter.

<Program Grouping>

A group information table describes information on each program group. The group information table is included in the content description metadata, as described before, and published by the metadata generating unit 200.

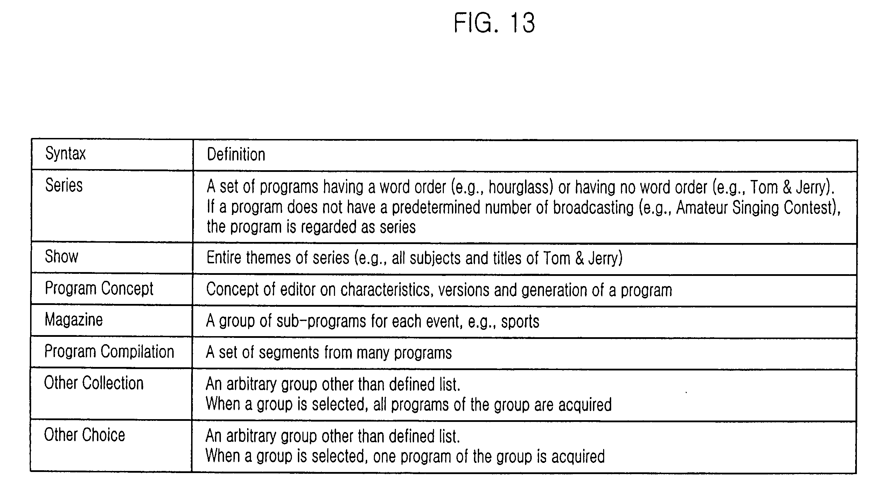

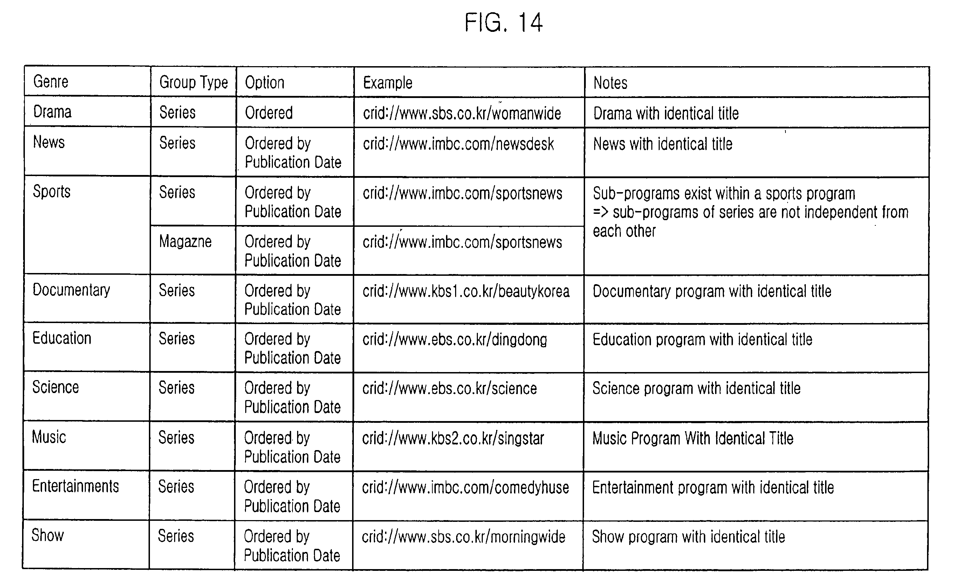

Fig. 13 defines the meanings of groups of programs. As shown in the drawing, there are groups of series, show, program content, magazine, program compilation, other collection, and other choice. Fig. 14 defines to which group to map the programs of each genre.

<Determination of Preferred Program>

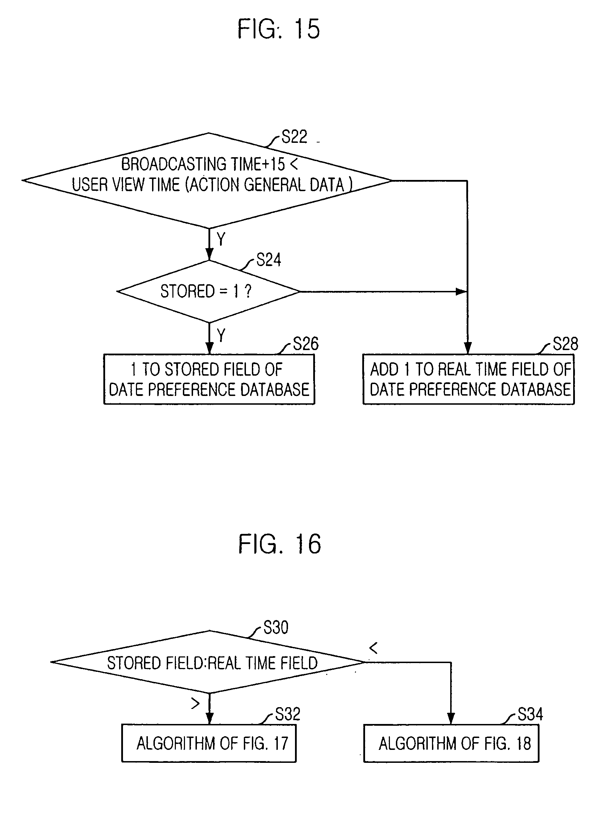

Figs. 15 and 16 are flowcharts showing a process for determining whether a program stored in a PDR is preferred or a program broadcasted in real-time is preferred in a preferred duration. Referring to Fig. 15, when the user logs out, at step S22, if a value obtained by adding 15 minutes to a published time is faster than the action general data (for example, Sunday 10:00a.m.) and, at step S24, the program is stored in the PDR, this means that the user has not watched a real-time streaming program but has watched a program stored in the PDR. As a result, at step S26, 1 is added to a Stored field of a date preference database of Fig. 10. Otherwise, at step S28, 1 is added to a Real Time field of the date preference database. Here, the 15 minutes added to the published time is an average delay time of a program.

Therefore, as shown in Fig. 16, whether the user prefers the program stored in the PDR at a particular time can be determined by comparing the values of the Stored field and the Real Time field of the date preference database of Fig. 10, at step S30.

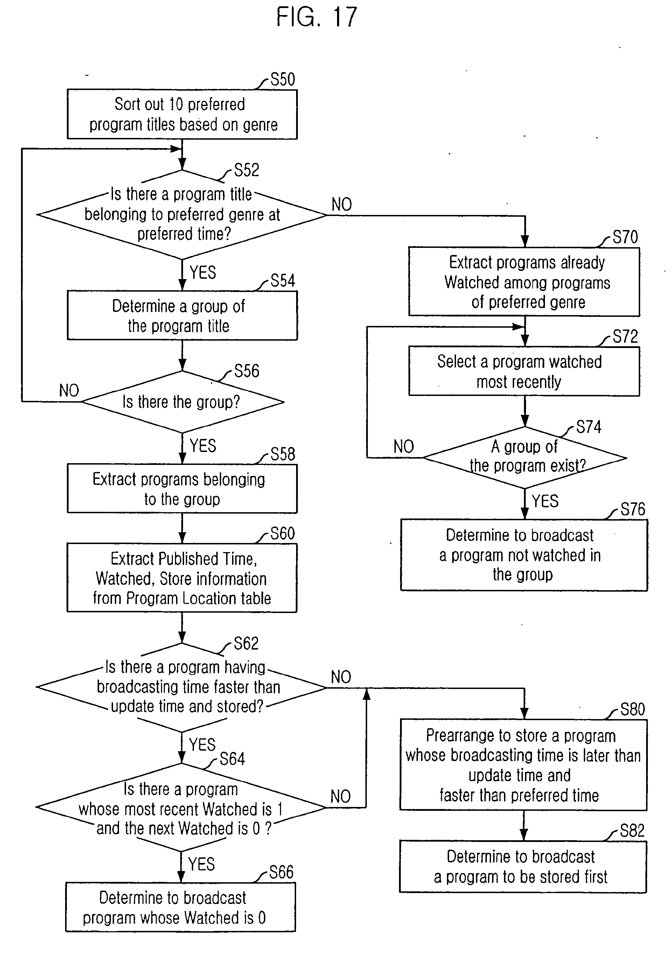

If the value of the Stored field is larger than that of the Real Time field, this means that the user has strong propensity to watch a program stored in the PDR in the preferred duration. Therefore, at step S32, a preferred program is determined based on an algorithm illustrated in Fig. 17.

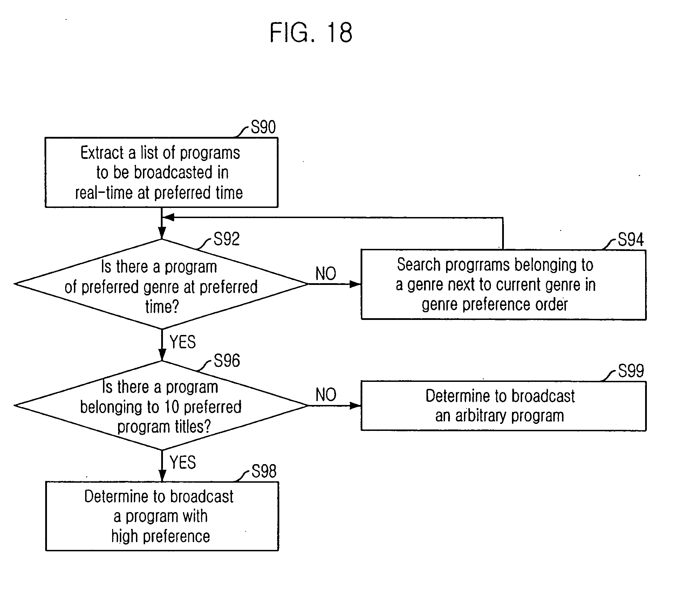

If the value of the Stored field is smaller than that of the Real Time field, this means that the user has strong propensity to watch a program broadcasted in real-time. Therefore, at step S34, a preferred program is determined based on an algorithm illustrated in Fig. 18.

Fig. 17 is a flowchart illustrating a process for determining a preferred program, when a user has a strong propensity to watch a program stored in a PDR in a preferred duration. In this process, it is determined which program is broadcasted on the personal channel in the preferred duration among many programs stored in the PDR.

As described before, program title preferences and preferred genre on a preferred date (day and time) are registered in the filtering and search preference table of Fig. 11.

At step S50, the 10 preferred program titles registered in the filtering and search preference table are grouped and arranged according to genre of the programs. At steps S52, S54 and S56, if there are program titles that belong to the preferred genre in the preferred duration, a group of the most preferred program title is determined. For instance, if the preferred date is SUN20 (i.e., 8p.m., Sunday) and the preferred genre in the preferred duration is drama, it is checked whether there is a program title belonging to the drama genre among the 10 preferred program titles. If there is a program title "Sangdo", a group of programs titled "Sangdo" is determined to be broadcasted.

If there is no group for a preferred program title, it means that the program is a one-time broadcasting program, such as Christmas special program and there is no unwatched program similar to the preferred program. And thus it is almost impossible to recommend the program again. Therefore, if there is no group for a selected program, the logic flow goes back to the step S52 and another program with the next high preference is searched.

If there is a group for the selected program, all programs of the group are extracted and, at step S60, published time, Watched, and Store information for the respective programs are extracted from a program location table.

At steps S62, S64 and S66, if there is a program of which the published time is faster than the update time and there is a program not watched by the user among the stored programs (i.e., watched = 0), the program not watched is determined to be broadcasted on the personal channel in the preferred duration. The update time is a present time point for determining a preferred program in the personal channel controlling unit 600.

If the user does not watch a program broadcasted before the recently watched program, the program which is not watched is dismissed. That is, following a program whose Watched most recently is 1, the program whose Watched is 0 is selected to be broadcasted on the personal channel. For example, if the user has watched the 16th and 18th episodes of the program "Sangdo" and not watched the 17th episode of "Sangdo", it is determined to broadcast the 19th episode of "Sangdo".

Meanwhile, if the published time of a program is later than the update time, if the published time is a bit faster than the update time but there is no stored program, or if the user has watched all the stored programs (in this case, there is no program whose Watched is 0), at step S80, all programs having published time later than the update time and faster than the preferred duration are reserved to be stored.

At step S82, among the programs reserved to be stored, a program to be stored first is determined to be broadcasted in the preferred duration. Although it is not illustrated in the drawings, if there is no program to be stored first, for example, if the drama program came to an end, the logic flow goes to the step S52 and another program title with the next highest preference is selected for the same processes.

At the step S50, when 10 program titles preferred by the user are divided and arranged according to genre but there is no program title that belongs to the preferred genre in the preferred duration, at step S70, programs already watched among the programs of the preferred genre are extracted and, at step S72, a program that is watched most recently is selected.

Subsequently, at step S74, a group to which the selected program belongs is detected and, at step S76, a program not watched among the programs of the group is determined to be broadcasted on the personal channel in the preferred duration. If all the programs of the group, to which the selected program belongs, are watched, a program second most recently watched is selected and the processes of the steps S74 and S76 are repeated.

If a group for the above selected program does not exist, the logic flow goes to the step S52, and a program next recently watched is selected and the processes of the steps S74 and S76 are repeated.

Although it is not illustrated in the drawing, if there is a program that satisfies the steps S72, S74 and S76 among the programs extracted at the step S70, it is desirable to perform the processes of the steps S80 and S82.

Fig. 18 is a flowchart illustrating a process for determining a preferred program, when a user has a strong propensity to watch a program broadcasted in real-time in a preferred duration. In this case, all that needs to be done is determine which program should be recommended on the personal channel among the programs to be broadcasted in real-time in the preferred duration, regardless of the programs stored in the PDR.

Referring to Fig. 18, at step S90, a program list to be broadcasted in real-time in the preferred duration can be obtained from the instance description metadata published by the service provider.

Among the programs of the program list, at steps 92, S96 and S98, if there are programs that belong to the preferred genre in the preferred duration and the programs are ones of the 10 preferred program titles, a program with high preference among the programs is determined to be recommended on the personal channel in the preferred duration.

If the programs are not ones of the 10 preferred program titles, at step S99, an arbitrary program that belongs to the preferred genre in the preferred duration is determined to berecommended on the personal channel.

If there is no program that belongs to the preferred genre in the preferred duration among the programs broadcasted in real-time in the preferred duration, at step S94, a program that belongs to a genre next preferred by the user in the order of genre preference is searched and the same processes are performed.

<Personal Channel Information Generation>

The instance description metadata is a metadata that includes information on a broadcasting content object. It includes a program location, which includes broadcasting event information, and service information, which is information on a unit providing the broadcasting content object.

Hereinafter, a method for forming an instance description metadata is described to provide personal channel service.

<Extension of Program Location Table>

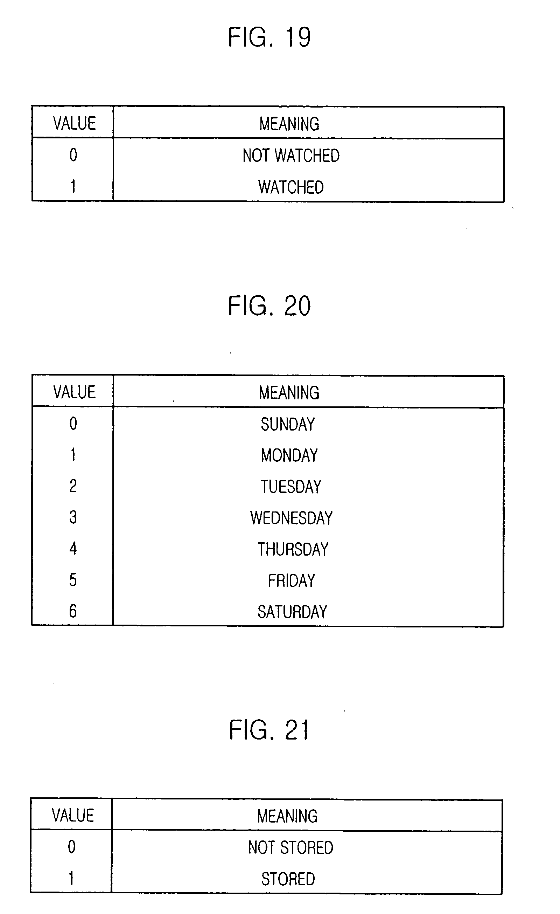

The personal channel service provides a program preferred by a user in a preferred duration on a preferred day. Generally, users do not watch a program more than one time. Thus, a program provided on the personal channel should be a program similar to the programs preferred by the user but not shown yet. To show whether the program is watched or not, a "Watched" field is added to a program location table, which is shown in Fig. 19.

Also, to provide the program in a preferred duration on a preferred day, it should be known what day a published time of the program is. Therefore, as illustrated in Fig. 20, a "Day" field is added to the program location table.

Likewise, a "Store" field is added to the program location table to show whether the program has already been stored in the PDR, which is illustrated in Fig. 21.

<Addition of Personal Channel to Service Information Table>

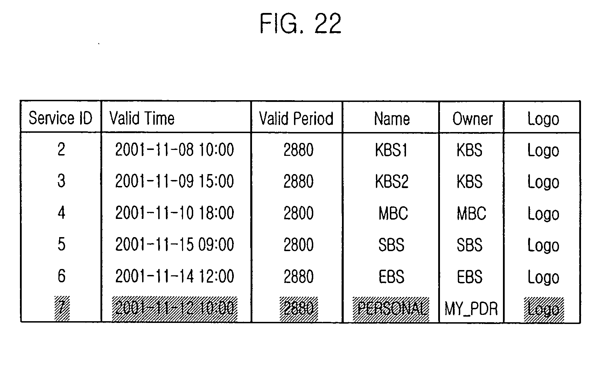

The personal channel service is provided through one independent channel that provides programs preferred by individual user only, other than general public waves (e.g., MBC, KBS, SBS in Korea). Therefore, personal channel information is added to the service information table which contains information on broadcasting stations that provide contents, as shown in Fig. 22.

<Addition of Program Instance to Program Location Table>

Once a program to be broadcasted in the preferred duration is determined through the process of determining a preferred program, the user should be informed that the program would be broadcasted on the personal channel in a duration preferred by the user. For this, information on program objects preferred by the user is added to the program location table, which includes broadcasting event information. The information on preferred program objects is obtained by referring to the program location table provided by the original service provider.

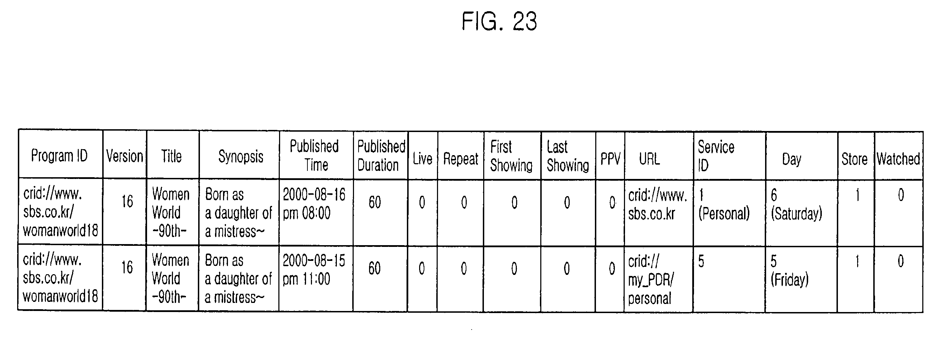

Fig. 23 is a table illustrating a structure of fields of the program location table to which personal channel information is added. Referring to Fig. 23, a low rank record of two records is a description provided by the service provider, while the upper rank record is a description inserted for personal channel service. The two descriptions are similar to each other in almost all fields including the CRID, and service channel information is the only data that can identify them.

Fields of the program location table for personal channel mean as follows.

Published Time: a preferred duration of a program, the preferred duration being designated by the preferred date of Fig. 11.

URL: uniform resource locator (URL) of broadcasting stations is ftp://my_PDR/personal/, which indicates a hard disk of an individual PDR.

Service ID: a "personal" channel added in the process of adding a personal channel to the service information table.

Day: the preferred date of Fig. 11 has a day information, such as 2002-04-15 MON PM 11:00:00. A value of Day is determined by referring to the preferred date and the table of Fig. 20.

Watched: 0

As described above, since the preferred duration and the preferred programs can be extracted automatically based on the usage history information, it is possible to provide programs preferred by the user on the personal channel.

While the present invention has been described with respect to certain preferred embodiments, it will be apparent to those skilled in the art that various changes and modifications may be made without departing from the scope of the invention as defined in the following claims.

**Claims**

1. A personal channel service providing method for outputting a television (TV) program preferred by a user, which is referred to as a preferred program, through a personal channel of a personal digital recorder (PDR) in a time duration preferred by the user, which is referred to as a preferred duration, the method comprising the steps of:

   a) receiving content description data and instance description data of a program to be broadcasted through a TV network;
   b) determining the preferred duration and the preferred program in the preferred duration based on usage history of the PDR, and updating the instance description data to include the preferred duration and the preferred program;
   c) generating an electronic program guide (EPG) for informing the user that the preferred program is outputted on the personal channel in the preferred duration based on the updated instance description data; and
   d) outputting the EPG to the PDR.

2. The method as recited in claim 1, wherein the step b) includes the steps of:

   e) selecting the preferred duration, such as day and time, genre preferred in the preferred duration, which is referred to as a preferred genre, and a predetermined number of preferred program titles based on the usage history of the PDR, and generating user preference data to include the preferred duration, the preferred genre, and the preferred program titles;
   f) if the preferred duration is for watching a program stored in the PDR, extracting group information of a program title that belong to the preferred genre among the preferred program titles based on the content description data; and
   g) determining a program following a most recently watched program among the programs that belong to the group as the preferred program in the preferred duration.

3. The method as recited in claim 2, wherein the preferred duration, such as day and time, is selected based on total duration of programs outputted by the PDR in a particular time duration.

4. The method as recited in claim 2, wherein a genre of a program that occupies the longest duration among the programs outputted by the PDR in the preferred duration is selected as the preferred genre.

5. The method as recited in claim 2, wherein the preferred program titles are selected based on the program duration outputted by the PDR, the EPG, and a frequency of program information exposure.

**6.** The method as recited in claim 1, wherein the step b) includes the steps of:

> h) selecting the preferred duration, such as day and time, preferred genre in the preferred duration, and a predetermined number of preferred program titles based on the usage history of the PDR, and generating user preference data to include the preferred duration, the preferred genre, and the preferred program titles;
> i) if the preferred duration is for watching a program broadcasted in real-time, extracting a list of real-time broadcasting programs from the instance description data; and
> j) determining a program that belongs to the preferred genre among the programs on the list as the preferred program in the preferred duration.

**7.** The method as recited in claim 6, wherein the preferred duration, such as day and time, is selected based on total duration of programs outputted by the PDR in a particular time duration.

**8.** The method as recited in claim 6, wherein a genre of a program that occupies the longest duration among the programs outputted by the PDR in the preferred duration is selected as the preferred genre.

**9.** The method as recited in claim 6, wherein the preferred program titles are selected based on the duration of programs outputted by the PDR, the EPG, and a frequency of program information exposure.

**10.** A personal channel service providing apparatus for outputting a TV program preferred by a user, which is referred to as a preferred program, through a personal channel in a time duration preferred by the user, which is referred to as a preferred duration, the apparatus comprising:

> a memory portion for storing a control program;
> a database for storing instance description data, content description data, and user preference data based on usage history of the personal channel service providing apparatus;
> a display portion for outputting an EPG; and
> a processing portion for updating the instance description data based on the user preference data and generating an EPG which informs the user that the preferred program is outputted through the personal channel in the preferred duration based on the updated instance description data, the processing portion being connected to the memory portion, the database, and the display portion.

**11.** The apparatus as recited in claim 10, wherein the processing block further performs the steps of:

> selecting the preferred duration, such as day and time, preferred genre in the preferred duration, and a predetermined number of preferred program titles based on the usage history of the personal channel service providing apparatus and generating the user preference data to include the preferred duration, the preferred genre, and the preferred program titles;
> if the preferred duration is for watching a program stored in the personal channel service providing apparatus, extracting group information of the program title that belongs to the preferred genre among the preferred program titles from the content description data; and
> determining a program following a most recently watched program among the programs belonging to the group as the preferred program in the preferred duration.

**12.** The apparatus as recited in claim 11, wherein the preferred duration, such as day and time, is selected based on total duration of programs outputted by the personal channel service providing apparatus in a particular time duration.

**13.** The apparatus as recited in claim 11, wherein a genre of a program that occupies the longest duration among the programs outputted by the personal channel service providing apparatus in the preferred duration is selected as the preferred genre.

**14.** The apparatus as recited in claim 11, wherein the preferred program titles are selected based on program duration outputted by the personal channel service providing apparatus, the EPG, and a frequency of program information exposure.

**15.** The apparatus as recited in claim 10, wherein the processing block further performs the steps of:

selecting the preferred duration, such as day and time, preferred genre in the preferred duration, and a predetermined number of preferred program titles based on the usage history of the personal channel service providing apparatus, and generating user preference data to include the preferred duration, the preferred genre, and the preferred program titles;

if the preferred duration is for watching a program broadcasted in real-time, extracting a list of real-time broadcasting programs from the instance description data; and

determining a program that belongs to the preferred genre among the programs in the list as the preferred program in the preferred duration.

16. The apparatus as recited in claim 15, wherein the preferred duration, such as day and time, are selected based on a total duration of programs outputted by the personal channel service providing apparatus in a particular time duration.

17. The apparatus as recited in claim 15, wherein a genre of a program that occupies the longest duration among the programs outputted by the personal channel service providing apparatus in the preferred duration is selected as the preferred genre.

18. The apparatus as recited in claim 15, wherein the preferred program titles are selected based on the duration of programs outputted by the personal channel service providing apparatus, the EPG, and a frequency of program information exposure.

# FIG. 1

**Service Provider**

| Ch ＼date | 9/2 | 3 | 4 | 5 | 6 | 7 | 8 |
|---|---|---|---|---|---|---|---|
| Ch1 | | | | | | | |
| Ch2 | | | | | | | |
| . . . | | | | | | | |

| Ch ＼date | 9/2 | 3 | 4 | 5 | 6 | 7 | 8 |
|---|---|---|---|---|---|---|---|
| Ch1 | | | | | | | |
| Ch2 | | | | | | | |
| . . . | | | | | | | |

Instance Description Metadata

**PDR**

Personal Channel Controller ～600

Personalized Instance Metadata

| Ch ＼date | 9/2 | 3 | 4 | 5 | 6 | 7 | 8 |
|---|---|---|---|---|---|---|---|
| Personal Channel | | | | | | | |

# FIG. 2

**Service Provider**

CRID & Location Resolution Unit `100`

→ Location Resolution Table →

Metadata Generating Unit `200`

→ Instance Description Metadata
Content Description Metadata →

**PDR**

User Interface Unit `300` → Usage History →

Metadata Collecting Unit `400`

User Profile Unit `500`

← Preference of User ←

Personalized Instance Metadata

Personal Channel Controlling Unit `600`

EP 1 401 198 A2

# FIG. 3

```
<ProgramDescription>
      <ProgramInformationTable >
            <ProgramInformation programId="crid://imbc.com/sangdo/episode17">
                  <BasicDescription>
                        <Title> Sangdo_17 </Title>
                        <Synopsis> The one where SangOk is embarrassed with the rumor
                        </Synopsis>
                        <Genre href="urn:mpeg:TVAnytime_v0.1ContentCS:2.1.1">
                              <mpeg7:Name >Drama</mpeg7:Name>
                        </Genre>
                  </BasicDescription>
            </ProgramInformation>
            <ProgramInformation programId="crid://imbc.com/sangdo/episode18">
                  <BasicDescription>
                        <Title> Sangdo_18 </Title>
                        <Synopsis> The one where SangOk sold his clothes cheaply
                        </Synopsis>
                        <Genre href="urn:mpeg:TVAnytime_v0.1ContentCS:2.1.1">
                              <mpeg7:Name >Drama</mpeg7:Name>
                        </Genre>
                  </BasicDescription>
            </ProgramInformation>
      </ProgramInformationTable>
      <GroupInformationTable>
            <GroupInformation groupId="crid://imbc.com/sangdo/several"
                  ordered="true" numOfItems="2"">
                  <GroupType xsi:type="ProgramGroupTypeType" value="series"/>
                  <BasicDescription>
                        <Title>Sangdo</Title>
                        <Synopsis>Several episodes of Sangdo</Synopsis>
                        <Genre href="urn:mpeg:TVAnytime_v0.1ContentCS:2.1.1">
                              <mpeg7:Name>Drama</mpeg7:Name>
                        </Genre>
                  </BasicDescription>
            </GroupInformation>
      </GroupInformationTable>
</ProgramDescription>
```

## FIG. 4

```
<ProgramDescription>
        <ProgramLocationTable>
            <BroadcastEvent>
                <Program crid="crid://imbc.com/sangdo/episode17"/>
                <BroadcastURL>dvb://1.4ee2.3f4/</BroadcastURL>
                <EventDescription>
                    <PublishedTime>2002-04-22T22:00:00</PublishedTime>
                    <PublishedDuration>PT50M</PublishedDuration>
                </EventDescription>
                <ServiceId id="Ch1"/>
            </BroadcastEvent>
            <BroadcastEvent>
                <Program crid="crid://imbc.com/sangdo/episode18"/>
                <BroadcastURL>dvb://1.4ee2.3f4/</BroadcastURL>
                <EventDescription>
                    <PublishedTime>2002-04-23T22:00:00.00</PublishedTime>
                    <PublishedDuration>PT50M</PublishedDuration>
                </EventDescription>
                <ServiceId id="Ch1"/>
            </BroadcastEvent>
        </ProgramLocationTable>
        <ServiceInformationTable>
            <ServiceInformation serviceId="Ch1">
                <Name>MBC</Name>
                <Owner>MBC</Owner>
            </ServiceInformation>
        </ServiceInformationTable>
</ProgramDescription>
```

## FIG. 5

```
<UserDescription>
    <UserPreferences>
        <mpeg7:UserIdentifier>
            <mpeg7:Name xml:lang="en">etri</mpeg7:Name>
        </mpeg7:UserIdentifier>
        <mpeg7:FilteringAndSearchPreferences>
            <mpeg7:CreationPreferences>
                <mpeg7:Title preferenceValue="99">sangdo</mpeg7:Title>
            </mpeg7:CreationPreferences>
        </mpeg7:FilteringAndSearchPreferences>
        <mpeg7:FilteringAndSearchPreferences>
            <mpeg7:ClassificationPreferences>
                <mpeg7:Genre href="urn:mpeg:mpeg7:cs:GenreCS:2001:2.1.1"
                        preferenceValue="80">
                        <mpeg7:Name>Drama</mpeg7:Name>
                </mpeg7:Genre>
            </mpeg7:ClassificationPreferences>
            <mpeg7:PreferenceCondition>
                <mpeg7:Time recurrence="weekly">
                    <mpeg7:TimePoint>2002-04-23T11:00</mpeg7:TimePoint>
                    <mpeg7:Duration>PT1H</mpeg7:Duration>
                </mpeg7:Time>
            </mpeg7:PreferenceCondition>
        </mpeg7:FilteringAndSearchPreferences>
    </UserPreferences>
</UserDescription>
```

# FIG. 6

```
<ProgramDescription>
    <ProgramLocationTable>
        <BroadcastEvent>
            <Program crid="crid://imbc.com/sangdo/episode18"/>
            <BroadcastURL>dvb://1.4ee2.3f4/</BroadcastURL>
            <EventDescription>
                <PublishedTime>2002-04-16T22:00:00.00</PublishedTime>
                <PublishedDuration>PT50M</PublishedDuration>
            </EventDescription>
            <ServiceId id="Ch1" />
        </BroadcastEvent>
        <BroadcastEvent>
            <Program crid="crid://imbc.com/sangdo/episode18"/>
            <BroadcastURL> My_PDR/personal/</BroadcastURL>
            <EventDescription>
                <PublishedTime>2002-04-20T11:00:00.00</PublishedTime>
                <PublishedDuration>PT50H</PublishedDuration>
            </EventDescription>
            <ServiceId id="Ch2" />
        </BroadcastEvent>
    </ProgramLocationTable>
    <ServiceInformationTable>
        <ServiceInformation serviceId="Ch1">
            <Name>MBC</Name>
            <Owner>MBC</Owner>
        </ServiceInformation>
        <ServiceInformation serviceId="Ch2">
            <Name> PERSONAL </Name>
            <Owner>My_PDR</Owner>
        </ServiceInformation>
    </ServiceInformationTable>
</ProgramDescription>
```

## FIG. 7

```
<UserDescription>
    <UsageHistory id="usage-history-001" allowCollection="true">
        <mpeg7:UserIdentifier protected="true">
            <mpeg7:Name xml:lang="en">etri</mpeg7:Name>
        </mpeg7:UserIdentifier>
        <mpeg7:UserActionHistory protection="false">
            <mpeg7:ObservationPeriod>
                <mpeg7:TimePoint>2002-04-18T10:00</mpeg7:TimePoint>
                <mpeg7:Duration>PT3H</mpeg7:Duration>
            </mpeg7:ObservationPeriod>
            <mpeg7:UserActionList id="ua-list-001"
                numInstances="1" totalDuration="PT20M">
                <mpeg7:ActionType href=" urn:mpeg:mpeg7:cs:ActionTypeCS:2001:3.4">
                    <mpeg7:Name>ViewGuide</mpeg7:Name>
                </mpeg7:ActionType>
                <mpeg7:UserAction>
                    <mpeg7:ActionTime>
                        <mpeg7:MediaTime>
                            <mpeg7:MediaTimePoint>
                                2002-04-18T10:05:00
                            </mpeg7:MediaTimePoint>
                            <mpeg7:MediaDuration>PT00H20M
                            </mpeg7:MediaDuration>
                        </mpeg7:MediaTime>
                    </mpeg7:ActionTime>
                    <mpeg7:ProgramIdentifier organization="TVAF" type="CRID">
                        crid://imbc.com/sangdo/several
                    </mpeg7:ProgramIdentifier>
                </mpeg7:UserAction>
            </mpeg7:UserActionList>
        </mpeg7:UserActionHistory>
    </UsageHistory>
</UserDescription>
```

EP 1 401 198 A2

FIG. 8

```
<ContentReferencingTable>
    <Result CRID="crid://imbc.com/sangdo/episode18" status="resolved" complete="true"        acquire="any">
            <LocationsResult>
                <Locator>
                        dvb://1.4ee2.3f4;4f5@2002-04-16T22:00:00.00/PT00H50M
                </Locator>
                <Locator>
                        My_PDR/personal/sangdo18@2002-04-20T11:00:00.00/PT00H50M
                </Locator>
            </LocationsResult>
        </Result>
</ContentReferencingTable>
```

21

## FIG. 9

| SQL Server Enterprise Manager−[2:Data of 'Usage History' Table('TVAConsumerMetadata'Database, 'LHK95'Computer)] | | | | | | | | | | | | | | |
|---|---|---|---|---|---|---|---|---|---|---|---|---|---|---|
| Console(C)  Window(W)   Help(H) | | | | | | | | | | | | | | |
| Userl dentifier | Observed Date | Observed Duration | numC | Total Duration | Action Type Nam | Action Type ID | Program ID | Action | Brow | Query | Action Media Date | Action Media Dur | Action General Date |
| User 1 | 2002−08−27 pm | 56 | 0 | 0 | Search | 3.7 | | | 0 | Sangdo | 1970−01−01 am 9:00 | 0 | 2002−08−27 pm 5:02:48 |
| User 1 | 2002−08−27 pm | 56 | 0 | 0 | PlayRecording | 1.1 | crid://www.kbs1.co.kr/language200100385 | | 1 | | 1970−01−01 am 9:00 | 9 | 2002−08−27 pm 5:02:45 |
| User 1 | 2002−08−27 pm | 57 | 0 | 0 | Search | 3.7 | | | 0 | Sangdo | 1970−01−01 am 9:00 | 0 | 2002−08−27 pm 5:07:08 |
| User 1 | 2002−08−27 pm | 57 | 0 | 0 | PlayRecording | 1.1 | crid://www.kbs1.co.kr/language200100385 | | 1 | | 1970−01−01 am 9:00 | 12 | 2002−08−27 pm 5:07:01 |
| User 1 | 2002−08−27 pm | 56 | 0 | 0 | Search | 3.7 | | | 0 | QUESTION | 1970−01−01 am 9:00 | 0 | 2002−08−27 pm 5:09:19 |
| User 1 | 2002−08−27 pm | 56 | 0 | 0 | Search | 3.7 | | | 0 | QUERY | 1970−01−01 am 9:00 | 0 | 2002−08−27 pm 5:09:29 |
| User 1 | 2002−08−27 pm | 56 | 0 | 0 | Search | 3.7 | | | 0 | EVENT | 1970−01−01 am 9:00 | 0 | 2002−08−27 pm 5:09:34 |
| User 1 | 2002−08−27 pm | 56 | 0 | 0 | Search | 3.7 | | | 0 | DESCRIPTION | 1970−01−01 am 9:00 | 0 | 2002−08−27 pm 5:09:43 |
| User 1 | 2002−08−27 pm | 56 | 0 | 0 | PlayRecording | 1.1 | crid://www.kbs1.co.kr/language200100385 | | 1 | | 1970−01−01 am 9:00 | 34 | 2002−08−27 pm 5:09:13 |
| User 1 | 2002−08−27 pm | 57 | 0 | 0 | Search | 3.7 | | | 0 | Kim, Gu-Sun | 1970−01−01 am 9:00 | 0 | 2002−08−27 pm 5:13:01 |
| User 1 | 2002−08−27 pm | 57 | 0 | 0 | PlayRecording | 1.1 | crid://www.kbs1.co.kr/language200100385 | | 1 | | 1970−01−01 am 9:00 | 12 | 2002−08−27 pm 5:12:53 |
| User 1 | 2002−08−27 pm | 56 | 0 | 0 | Search | 3.7 | | | 0 | Kim, So-Wol | 1970−01−01 am 9:00 | 0 | 2002−08−27 pm 5:16:02 |
| User 1 | 2002−08−27 pm | 56 | 0 | 0 | PlayRecording | 1.1 | crid://www.kbs1.co.kr/language200100385 | | 1 | | 1970−01−01 am 9:00 | 13 | 2002−08−27 pm 5:15:53 |
| User 1 | 2002−08−27 pm | 56 | 0 | 0 | Search | 3.7 | | | 0 | Kim, So-Wol | 1970−01−01 am 9:00 | 0 | 2002−08−27 pm 5:38:15 |
| User 1 | 2002−08−27 pm | 56 | 0 | 0 | PlayRecording | 1.1 | crid://www.kbs1.co.kr/language200100385 | | 1 | | 1970−01−01 am 9:00 | 10 | 2002−08−27 pm 5:38:11 |
| User 1 | 2002−08−27 pm | 56 | 0 | 0 | Search | 3.7 | | | 0 | Kim, So-Wol | 1970−01−01 am 9:00 | 0 | 2002−08−27 pm 5:40:04 |
| User 1 | 2002−08−27 pm | 56 | 0 | 0 | PlayRecording | 1.1 | crid://www.kbs1.co.kr/novel200100389 | | 1 | | 1970−01−01 am 9:00 | 1 | 2002−08−27 pm 7:13:39 |
| User 1 | 2002−08−28 am | 56 | 0 | 0 | PlayRecording | 1.1 | crid://www.kbs2.co.kr/dongsuh200100444 | | 1 | | 1970−01−01 am 9:00 | 1 | 2002−08−28 am 9:12:56 |
| User 1 | 2002−08−27 pm | 56 | 0 | 0 | ViewGuide | 3.4 | crid://www.imbc.com/lover200100752 | | 0 | | 1970−01−01 am 9:00 | 0 | 2002−08−27 pm 7:14:03 |

# FIG. 10

Date Preference DB

| User ID | Date | Preference Value | Real Time | Stored |
|---|---|---|---|---|
| Hong, Gil-Dong | SUN 00 | 88 | 3 | 2 |
| | SUN 01 | 22 | | |
| | | | | |
| | | | | |
| | | | | |
| | MON 00 | 22 | | |
| | MON 01 | -10 | | |
| | MON 02 | | | |

| User ID | Date | Preference Value | Watched Duration |
|---|---|---|---|
| Hong, Gil-Dong | SUN 00 | DRAMA | 40 |
| | | NEWS | 20 |
| | | SPORTS | 0 |
| | | | |
| | SUN 01 | | |
| | MON 00 | 90 | |
| | MON 01 | 50 | |
| | MON 02 | | |

# FIG. 11

Filtering & Search Preference Table

| Field | Type of Data | Example |
|---|---|---|
| User Identifier | Textual Type | Hong, Gil-Dong |
| Preference Value | Interger | -100~+100 |
| Title | Textual Type | Sangdo: Life of Ginseng Merchant |
| Genre | Textual Type | DRAMA |
| Genre ID | Genre·Classification·Number | 2.1.1 |
| Preferred Date | Textual Type | 2002-04-15 MON pm 11:00:00 |
| Preferred Duration | Unsigned Integer | 60(Minute) |

## FIG. 12A

| ETRI | 2002-01-17 | | Program information |
|---|---|---|---|

Everyday with You –34th Episode–

Story of two women having closely located houses of family-in-law but emotionally far

Genre: Drama

| Channel | Broadcasting Station | Time | Title of Program | Save |
|---|---|---|---|---|
| 2 | KBS2 | 20:25–20:55 | This Is Love –39th– | |
| 4 | SBS | 20:20–20:55 | Everyday With You –34th– | |
| 4 | SBS | 20:55–21:50 | MBC News Desk | |
| 5 | EBS | 20:40–20:45 | Sports of Today | |

# FIG. 12B

EP 1 401 198 A2

| ETRI | 2002-01-17 | | | Group information |

Sangdo: Life of Ginseng Merchant

This drama shows what a real entrepreneur should be like and what economic justice is

Genre: Drama

(7)

| Channel | Broadcasting Station | TIME | Title of Program | Save |
|---|---|---|---|---|
| 3 | MBC | 22:05–23:05 | Sangdo –17th– | ⊘ |
| 3 | MBC | 22:05–23:05 | Sangdo –18th– | ⊘ |
| 3 | MBC | 22:05–23:05 | Sangdo –19th– | ⊘ |
| 3 | MBC | 22:05–23:05 | Sangdo –20th– | ⊘ |
| | | | | |
| | | | | |
| | | | | |
| | | | | |

## FIG. 13

| Syntax | Definition |
|---|---|
| Series | A set of programs having a word order (e.g., hourglass) or having no word order (e.g., Tom & Jerry). If a program does not have a predetermined number of broadcasting (e.g., Amateur Singing Contest), the program is regarded as series |
| Show | Entire themes of series (e.g., all subjects and titles of Tom & Jerry) |
| Program Concept | Concept of editor on characteristics, versions and generation of a program |
| Magazine | A group of sub-programs for each event, e.g., sports |
| Program Compilation | A set of segments from many programs |
| Other Collection | An arbitrary group other than defined list. When a group is selected, all programs of the group are acquired |
| Other Choice | An arbitrary group other than defined list. When a group is selected, one program of the group is acquired |

EP 1 401 198 A2

## FIG. 14

| Genre | Group Type | Option | Example | Notes |
|---|---|---|---|---|
| Drama | Series | Ordered | crid://www.sbs.co.kr/womanwide | Drama with identical title |
| News | Series | Ordered by Publication Date | crid://www.imbc.com/newsdesk | News with identical title |
| Sports | Series | Ordered by Publication Date | crid://www.imbc.com/sportsnews | Sub-programs exist within a sports program => sub-programs of series are not independent from each other |
|  | Magazne | Ordered by Publication Date | crid://www.imbc.com/sportsnews |  |
| Documentary | Series | Ordered by Publication Date | crid://www.kbs1.co.kr/beautykorea | Documentary program with identical title |
| Education | Series | Ordered by Publication Date | crid://www.ebs.co.kr/dingdong | Education program with identical title |
| Science | Series | Ordered by Publication Date | crid://www.ebs.co.kr/science | Science program with identical title |
| Music | Series | Ordered by Publication Date | crid://www.kbs2.co.kr/singstar | Music Program With Identical Title |
| Entertainments | Series | Ordered by Publication Date | crid://www.imbc.com/comedyhuse | Entertainment program with identical title |
| Show | Series | Ordered by Publication Date | crid://www.sbs.co.kr/morningwide | Show program with identical title |

EP 1 401 198 A2

EP 1 401 198 A2

FIG. 15

FIG. 16

# FIG. 17

S50

Sort out 10 preferred
program titles based on genre

S52

Is there a program title
belonging to preferred genre at
preferred time?

NO →

YES ↓

S54

Determine a group of
the program title

↓

S56

Is there the group?

NO →

YES ↓

S58

Extract programs belonging
to the group

↓

S60

Extract Published Time,
Watched, Store information
from Program Location table

↓

S62

Is there a program having
broadcasting time faster than
update time and stored?

NO →

YES ↓

S64

Is there a program
whose most recent Watched is 1
and the next Watched is 0 ?

NO →

YES ↓

S66

Determine to broadcast
program whose Watched is 0

---

S70

Extract programs already
Watched among programs
of preferred genre

↓

S72

Select a program watched
most recently

↓

S74

A group of
the program exist?

NO →

YES ↓

S76

Determine to broadcast
a program not watched in
the group

---

S80

Prearrange to store a program
whose broadcasting time is later than
update time and
faster than preferred time

↓

S82

Determine to broadcast
a program to be stored first

---

## FIG. 18

S90
Extract a list of programs
to be broadcasted in
real-time at preferred time

S92
Is there a program
of preferred genre at preferred
time?

NO → S94
Search progrrams belonging to
a genre next to current genre in
genre preference order

YES

S96
Is there a program
belonging to 10 preferred
program titles?

NO → S99
Determine to broadcast
an arbitrary program

YES

S98
Determine to broadcast
a program with
high preference

## FIG. 19

| VALUE | MEANING |
|---|---|
| 0 | NOT WATCHED |
| 1 | WATCHED |

## FIG. 20

| VALUE | MEANING |
|---|---|
| 0 | SUNDAY |
| 1 | MONDAY |
| 2 | TUESDAY |
| 3 | WEDNESDAY |
| 4 | THURSDAY |
| 5 | FRIDAY |
| 6 | SATURDAY |

## FIG. 21

| VALUE | MEANING |
|---|---|
| 0 | NOT STORED |
| 1 | STORED |

FIG. 22

| Service ID | Valid Time | Valid Period | Name | Owner | Logo |
|:---:|:---:|:---:|:---:|:---:|:---:|
| 2 | 2001-11-08 10:00 | 2880 | KBS1 | KBS | Logo |
| 3 | 2001-11-09 15:00 | 2880 | KBS2 | KBS | Logo |
| 4 | 2001-11-10 18:00 | 2800 | MBC | MBC | Logo |
| 5 | 2001-11-15 09:00 | 2800 | SBS | SBS | Logo |
| 6 | 2001-11-14 12:00 | 2880 | EBS | EBS | Logo |
| 7 | 2001-11-12 10:00 | 2880 | PERSONAL | MY_PDR | Logo |

FIG. 23

EP 1 401 198 A2

| Program ID | Version | Title | Synopsis | Published Time | Published Duration | Live | Repeat | First Showing | Last Showing | PPV | URL | Service ID | Day | Store | Watched |
|---|---|---|---|---|---|---|---|---|---|---|---|---|---|---|---|
| crid://www. sbs.co.kr/ womanworld18 | 16 | Women World -90th- | Born as a daughter of a mistress~ | 2000-08-16 pm 08:00 | 60 | 0 | 0 | 0 | 0 | 0 | crid://www. sbs.co.kr | 1 (Personal) | 6 (Saturday) | 1 | 0 |
| crid://www. sbs.co.kr/ womanworld18 | 16 | Women World -90th- | Born as a daughter of a mistress~ | 2000-08-15 pm 11:00 | 60 | 0 | 0 | 0 | 0 | 0 | crid:// my_PDR/ personal | 5 | 5 (Friday) | 1 | 0 |